Europäisches Patentamt

European Patent Office

Office européen des brevets

(19)

(11) Publication number: **0 091 765**
**B1**

(12) **EUROPEAN PATENT SPECIFICATION**

(45) Date of publication of patent specification: **11.11.87**

(21) Application number: **83301886.4**

(22) Date of filing: **05.04.83**

(51) Int. Cl.⁴: **H 04 N 3/00,** H 04 N 3/34, H 04 N 7/00

(54) High resolution television.

(30) Priority: **02.04.82 US 364884**

(43) Date of publication of application:
**19.10.83 Bulletin 83/42**

(45) Publication of the grant of the patent:
**11.11.87 Bulletin 87/46**

(84) Designated Contracting States:
**DE FR GB NL**

(56) References cited:
**DE-B-1 016 747**
**GB-A-1 400 771**

**FUNKSCHAU 1974, issue 26, München,**
**BRODER WENDLAND "Verbessertes**
**Bildfernsprech-System" pages 1017-1020**

(73) Proprietor: **High Resolution Television, Inc.**
**626 South Hudson Avenue**
**Los Angeles California 90005 (US)**

(72) Inventor: **Songer, Jimmie D.**
**Road 602 Route 6 Box 78**
**Burleson Texas 76028 (US)**

(74) Representative: **Tomlinson, Kerry John et al**
**Frank B. Dehn & Co. European Patent Attorneys**
**Imperial House 15-19 Kingsway**
**London WC2B 6UZ (GB)**

Courier Press, Leamington Spa, England.

## Description

This invention relates to television, and more particularly to a method and apparatus for increasing the vertical resolution of television.

In a television picture, there are two independent resolution factors, namely horizontal resolution, which depends upon system bandwidth, and vertical resolution, which depends upon the number of active scanning lines in a frame. Various techniques have been employed to increase horizontal resolution. For example, although the video bandwidth is limited at the transmitter, the video signal may be processed by a studio with twice the bandwidth of the transmitter on the theory that the better the picture into the transmitter, the better the picture at the receiver. But vertical resolution has, in the past, remained limited by the number of active scanning lines.

In the United States, the National Television Systems Committee (NTSC) has prescribed as a standard the total number of scanning lines of 525 divided into two interlaced fields. This number is significantly reduced to about 485 active scanning lines by the necessary vertical blanking time (approximately 7.5 percent of the total time for scanning 525 lines). Other factors may further degrade horizontal resolution, such as scanning spot size. It would be possible to increase vertical resolution by doubling the number of active scanning lines and decreasing the spot size, but the problem is to increase vertical resolution without deviating from the standard number of lines transmitted. The same would apply to other transmission systems adopted in other parts of the world, such as PAL and SECAM, since any finite number of prescribed lines limits the vertical resolution to something less than that number of picture elements (pixels) per vertical line, whereas the number of pixels per horizontal line may be and often is much greater than that number. In European systems each image consists of rather fewer than 625 lines in two interlaced fields.

Broder Wendland 'Verbessertes Bildfernsprech-System' Funkschau 1974 issue 26 pages 1017—1020 describes a facsimile transmission system in which the vertical scan is modulated with a sinusoidal waveform, the output of the wobble generator being mixed with the vertical scan signal. In the receiver the wobble signal, the picture signal and the synchronisation signals are separated.

## Summary of the Invention

Viewed from one aspect the invention provides a method of improving the vertical resolution of a video image produced frame by frame in a raster-scan display system comprising a video signal generator and a receiver, the method comprising the steps of modulating the vertical beam deflection of said generator while producing a video signal for each line of a frame, said modulation having a frequency sufficient for causing each line scanned to undulate about the normal straight line scan a significant number of cycles, and modulating the vertical beam deflection of said receiver with the same phase and relative amplitude as the modulation of said video signal for display of each line of a frame in the same pattern as scanned by said generator, characterised in that said generator transmits color information modulated on a color carrier generated by a stable oscillator, said receiver has a stable oscillator synchronised with said generator oscillator, and the modulation of the vertical beam deflection at said generator and said receiver is synchronised with said respective oscillators, and in that the amplitude of the vertical beam deflection modulation is sufficient for each cycle of undulation to intrude the scan area of adjacent lines in a frame.

Viewed from another aspect the invention provides a television system comprising a camera for producing a video signal and a receiver for display of said video signal, said camera having a yoke for vertical and horizontal deflection of an electron beam driven for scanning a predetermined number of horizontal lines for each video frame, and said receiver having a yoke for vertical and horizontal deflection of an electron beam synchronized for displaying said frame, and further comprising means for modulating the vertical beam deflection of said camera at a rate to produce a significant number of cycles of undulation about the normal straight line scan and means for modulating the vertical beam deflection of said receiver with the same phase and relative amplitude as the modulation of said camera vertical beam deflection for display of each line of said frame in the same pattern as scanned by said camera, characterised in that said camera transmits color information modulated on a color carrier generated by a stable oscillator, said receiver has a stable oscillator synchronised with said camera oscillator, and the modulation of the vertical beam deflection at said camera and said receiver is synchronised with said respective oscillators, and in that the amplitude of the vertical beam deflection modulation is sufficient for each cycle of undulation to intrude the scan area of adjacent lines in a frame.

In accordance with the preferred embodiment, vertical resolution is increased by modulating the vertical scan axis (deflection field) of a television camera or other picture signal generator such that each active scanning line traverses an undulatory path rather than a straight line. The amplitude of the modulation is preferably sufficient for interlaced lines of a frame to intrude the area of adjacent lines. The video signal thus produced by actually scanning areas above and below the normal interlaced scanning lines is then transmitted as for the normal scanning lines, which can be within the vestigial bandwidth limit of about 4 MHz for NTSC transmission of 6—8 MHz for PAL and SECAM.

At a monitor or television receiver, a local oscillator modulates the vertical scan axis of each line to be at the same frequency and phase as the modulation employed in the generator to synchronously reproduce each line of a frame. The local oscillator may be synchronized with the television camera by the information contained in the received video signal. For example, a gated burst of the color carrier may be transmitted during horizontal blanking periods for use in regenerating the color reference in the television receiver. Consequently, a convenient modulation frequency is the fundamental, and preferably a multiple of the color carrier. If the color carrier is used both in the television camera and the receiver for modulation of the vertical scan axis, the receiver will reproduce the frame in the same manner as it was scanned in the camera, which is with increased vertical resolution.

The second harmonic of the color carrier frequency is preferred in the NTSC system because, at the standard 15.734 kHz line frequency, each line will then have 455 modulation cycles rather than $227\frac{1}{2}$, thus making it easier to maintain modulation phase at the receiver with the modulation phase of the camera. However, the fundamental color carrier frequency may be used if inverted for every other line. The procedure of inverting every other line may be carried out for each frame of 525, and then repeated upon the occurrence of a vertical sync pulse.

The modulation at both the camera and the receiver is superimposed on the field of the horizontal and vertical deflection coils by additional coils. In the camera, the additional coils are located between the camera tube and the deflection yoke containing the horizontal and vertical deflection coils. In the receiver, the additional coils are located between the picture tube and its deflection yoke. These additional coils are aligned with the vertical deflection coils of the camera and picture tube yokes. Alternatively the modulation signals may be added to the deflection signals electronically.

An embodiment of the invention will now be described by way of example and with reference to the accompanying drawings, in which:

FIG. 1 illustrates schematically that part of a color television camera embodying the present invention.

FIG. 2 illustrates schematically that part of a color television receiver embodying the present invention.

FIG. 3 illustrates schematically the straight parallel scan lines of conventional television scanning and display.

FIG. 4 illustrates schematically the undulating parallel scan lines of the present invention which increases vertical resolution.

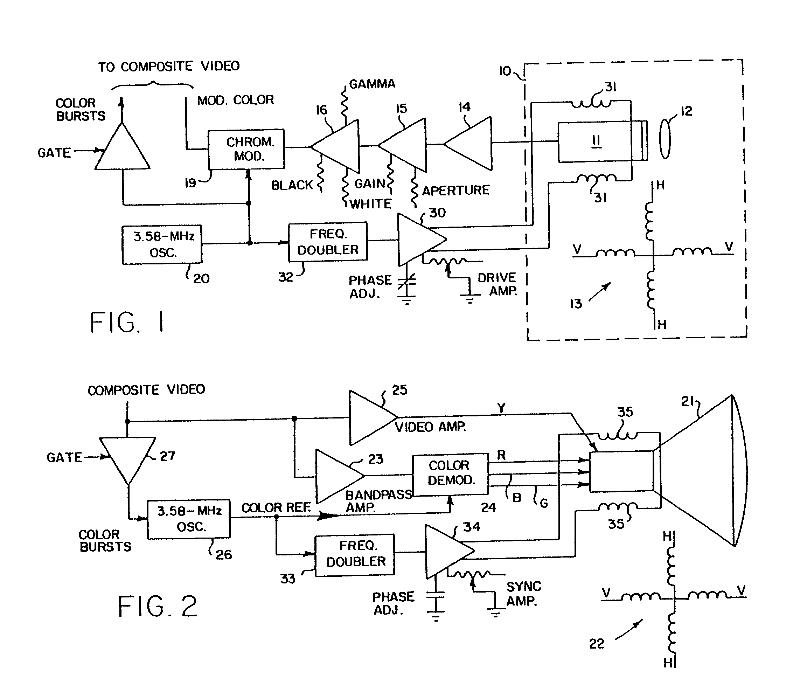

Referring to the drawings, Fig. 1 illustrates schematically those portions of a color television camera necessary for an understanding of the present invention which include a camera head 10 having a pickup tube 11, lens 12, and deflection yoke 13 for vertical and horizontal deflection of the electron scanning beam. The camera head is controlled by a unit (not shown) which provides the horizontal (H) and vertical (V) drive as well as blanking pulses in the usual manner. The video signal from the pickup tube is processed through a preamplifier 14, a video amplifier 15 (where the aperture and gain are set) and a processing amplifier 16 (where the black level, white level and Gamma are set).

The camera head 10 is shown with only one tube 11, as for black-and-white television, whereas in most systems for color television, three pickup tubes are used to scan the scene received through separate lenses and color filters that separate the red (R), blue (B), and green (G) light. Here all three pickup tubes are represented by one.

The video signal received by the control unit is modulated (encoded) by a chrominance modulator 19 using a carrier generated by a stable 3.58-MHz oscillator 20 tuned to precisely 3,579,545 Hz. The modulated color subcarrier is linked to the television transmitter and/or monitor through a control room where the audio signal is combined. Although the color carrier itself is not transmitted, gated color carrier bursts are transmitted during horizontal blanking periods for use in synchronizing the frequency and phase of a color reference oscillator in the receiver.

Fig. 2 illustrates schematically only those portions of a color television receiver which are necessary for an understanding of the invention. Basically, the receiver is comprised of a picture tube (CRT) 21 and deflection yoke 22. The deflection yoke receives the normal horizontal (H) and vertical (V) sync signals to scan 525 lines in two interlaced fields of 262.5 lines. The CRT also receives the normal line and frame blanking pulses during beam retrace periods. The composite color video is passed through a color bandpass amplifier 23 and demodulator 24 for demodulating the encoded color signals (R, B and G). The luminance signal (Y) is passed by a video amplifier 25 to the picture tube for control of brightness.

For the color demodulator, a 3.58-MHz color reference oscillator 26 is synchronized by the gated burst received via a gated amplifier 27 during each line blanking period. In that way, color demodulation (decoding) is synchronized with the color modulating (encoding) at the transmitter. The 3.58-MHz oscillator 26 operates at a stable frequency of 3,579,545 Hz, as does the color carrier oscillator 20 at the transmitter. The purpose of the gated burst is to synchronize the phase of the two oscillators.

What has been described so far is a color television system comprised of a standard NTSC camera and a compatible receiver. Only so much of each has been shown as is necessary to understand and practise the invention. In that regard, it should be understood that the NTSC standard is used by way of example, and not limitation. The invention to be described may be adopted to PAL and SECAM standard systems as well as other systems. It can also be adopted to black-and-white single channel systems. Some differences which may be noted from the system described so far are that in the PAL system the color subcarrier is 4.43361875 MHz and there are 625 lines and in the SECAM system the subcarrier is not suppressed, but these differences clearly do not affect the principles of the invention.

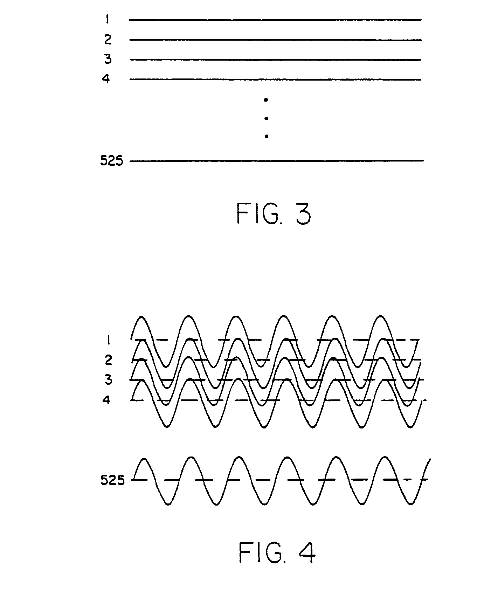

The essence of the invention is to use the 3.58-MHz oscillator 20 at the camera to modulate the vertical axis (V deflection field) of its 525 scan lines through a driver 30 and coils 31 located between the yoke 13 and tube 11. The normal (unmodulated) scan follows a pattern shown in Fig. 3. In actuality, the lines are sloped downwardly from left to right as the vertical sync continues to move the beam from the top to the bottom for one field of 262.5 lines. The return (while the line is blanked) is at a much greater rate than the scan, so that what is shown in Fig. 3 more nearly represents the return path for the blanked beam, but for purposes of this invention, it may be assumed that the scan lines are exactly horizontal (as indeed they appear to the viewer). The modulation superimposed by the coils 31 on adjacent lines from two fields of a frame is then shown in Fig. 4. Because the modulated scan lines are not straight lines, each modulated line includes more pixels, and the 525 lines cover more area in the entire frame to increase the vertical resolution by about two or more times, depending upon the amplitude of the modulation and the beam spot size.

The literature speaks of the scan rate of 15,750 lines/sec for convenience, just as it does of the color carrier as 3.58-MHz, but in actuality the number of lines scanned per second are 15,734. Dividing that number of lines into 3,759,545 Hz yields 227.50 cycles of modulation per scan line so the modulation pattern would repeat itself out of phase on every successive line of a field. It is desirable to have the same scanning pattern repeat itself in phase for every line of both fields of a frame. This could be achieved by inverting the modulating 3.58-MHz signal during every other line of a frame, i.e., during the even lines of a 525 line frame, using the blanking signals to control logic for this phase inversion, but the mathematics of the NTSC standard is fortuitous in that, by doubling the modulating frequency in a frequency doubler 32, there will be 455 cycles of modulation in every line scanned by the camera, and the higher frequency of modulation will increase the number of pixels included in each line scan, thereby increasing vertical resolution even more while also increasing horizontal resolution. Whether a scan line starts with a modulation of phase zero is not important; what is important is only that the same modulation phase be maintained from line to line throughout both fields of a frame. But, if desired, a phase adjustment can be made at the driver 30 as well as an amplitude adjustment.

In the receiver, the output of the synchronized 3.58-MHz oscillator 26 is also doubled by a frequency doubler 33 and then used through a driver 34 and deflection coils 35 to modulate the electron beam of the picture tube 21 as it is scanned 525 lines per frame by the yoke 22. The coils 35, aligned with the vertical deflection coils of the yoke 22, are located between the picture tube 21 and the yoke 22. In that manner, the same line scan modulation pattern of the camera is synchronously repeated at the picture tube for the desired increase in vertical resolution. Synchronization is achieved through control of the phase of the color oscillator 26 at the receiver by the gated color burst. Since phase control of that oscillator is necessary for color demodulation, no penalty is incurred at the receiver. All that is necessary is a frequency doubler, modulation coils and a driver between the modulation coils and the frequency doubler. Note that the camera also requires only a frequency doubler, driver and modulation coils. Everything else about the camera and receiver is the same as for a standard NTSC system.

This invention can be used for increased vertical resolution of a black-and-white receiver if it is equipped with a color oscillator, frequency doubler, driver and added vertical deflection coils. If not so equipped, the program broadcast, with modulation of the vertical axis in the camera, will be displayed as if transmitted from a camera not modulated. In that sense the invention is compatible with black-and-white receivers. A black-and-white camera can also be modified for increase of vertical resolution by simply providing a 3.58-MHz oscillator for modulation, and gating a burst of that signal during blanking pulse periods for phase synchronizing an oscillator in the receiver.

As noted hereinbefore, the general technique of modulating line scan of a camera (color or black-and-white) and synchronously modulating line scan of a receiver can be practised with other equipment and other standards, such as PAL and SECAM. The manner of synchronizing the receiver modulation with the camera modulation can also be varied to use any technique for transmitting from the camera a signal that may be used by the receiver for controlling the phase and frequency of a color oscillator in the receiver. In practice, the blanking pulses themselves may be used to set the phase of the modulating signal from a stable oscillator at the start of each line scan in the camera. The transmitted blanking signal is then detected by the receiver to similarly set the phase of the color oscillator at the start of each line scan. While additional coils are shown for modulation of vertical deflection in the camera and receiver, in practice the modulation signal may be electronically combined with the vertical deflection drive signal of the camera and/or the vertical deflection drive sync of the receiver.

The invention may in fact be applied to any raster-scan display system with a greater or smaller number of lines than those mentioned. For example, data display terminals may employ 250 lines and the video signals may be generated by a computer or other signal source, rather than a camera. Further, the term "vertical" should be taken to mean the direction of the slower scan:

should the image be scanned vertically, the invention may be applied to improve the horizontal resolution equivalent to increasing the number of lines.

**Claims**

1. A method of improving the vertical resolution of a video image produced frame by frame in a raster-scan display system comprising a video signal generator and a receiver, the method comprising the steps of modulating the vertical beam deflection of said generator while producing a video signal for each line of a frame, said modulation having a frequency sufficient for causing each line scanned to undulate about the normal straight line scan a significant number of cycles, and modulating the vertical beam deflection of said receiver with the same phase and relative amplitude as the modulation of said video signal for display of each line of a frame in the same pattern as scanned by said generator, characterised in that said generator transmits color information modulated on a color carrier generated by a stable oscillator (20), said receiver has a stable oscillator (26) synchronised with said generator oscillator, and the modulation of the vertical beam deflection at said generator and said receiver is synchronised with said respective oscillators, and in that the amplitude of the vertical beam deflection modulation is sufficient for each cycle of undulation to intrude the scan area of adjacent lines in a frame.

2. A method as claimed in claim 1 wherein information for synchronizing the modulation of said receiver is comprised of bursts of cycles from said stable oscillator (20) at said generator gated to said receiver during line blanking periods of said video signal, and said receiver accepts said bursts for synchronizing the phase of said stable oscillator at said receiver.

3. A method as claimed in claim 2 wherein each frame includes a predetermined number of lines divided into two fields of interlaced lines, including the step of shifting the phase of said color carrier on successive lines of each frame to maintain the modulation phase of each line constant at both said generator and said receiver.

4. A method as claimed in claim 2 including the step of multiplying the frequency of said carrier by a predetermined multiple for modulation of each line with a whole number of cycles at both said generator and said receiver.

5. A method as claimed in claim 4 wherein said predetermined multiple is an integral multiple.

6. A television system comprising a camera for producing a video signal and a receiver for display of said video signal, said camera having a yoke (13) for vertical and horizontal deflection of an electron beam driven for scanning a predetermined number of horizontal lines for each video frame, and said receiver having a yoke (22) for vertical and horizontal deflection of an electron beam synchronized for displaying said frame, and further comprising means (30, 31, 32) for modulating the vertical beam deflection of said camera at a rate to produce a significant number of cycles of undulation about the normal straight line scan and means (33, 34, 35) for modulating the vertical beam deflection of said receiver with the same phase and relative amplitude as the modulation of said camera vertical beam deflection for display of each line of said frame in the same pattern as scanned by said camera, characterised in that said camera transmits color information modulated on a color carrier generated by a stable oscillator (20), said receiver has a stable oscillator (26) synchronized with said camera oscillator, and the modulation of the vertical beam deflection at said camera and said receiver is synchronised with said respective oscillators, and in that the amplitude of the vertical beam deflection modulation is sufficient for each cycle of undulation to intrude the scan area of adjacent lines in a frame.

7. Apparatus as claimed in claim 6 wherein said deflection means for said camera comprises said stable camera oscillator (20) driving vertical deflection coils (31) associated with said yoke (13) of said camera, and said deflection means for said receiver comprises said stable receiver oscillator (26) driving vertical deflection coils (35) associated with said yoke (22) of said receiver.

8. Apparatus as claimed in claim 7 wherein synchronisation information transmitted by said camera with said video signal comprises bursts of cycles of said camera oscillator gated during line blanking periods of each frame.

9. Apparatus as claimed in claim 8 wherein said deflection means for said camera includes a frequency multiplier (32) for multiplying said oscillator frequency for said camera by a predetermined multiple and wherein said deflection means for said receiver includes a frequency multiplier (33) with the same multiple, whereby each scan line in both said camera and said receiver includes a whole number of modulation cycles.

**Patentansprüche**

1. Verfahren zum Verbessern der Vertikalauflösung eines Videobildes, das bildweise in einer Rasterabtast-Schirmbilddarstellungseinrichtung erzeugt wird, die einen Videosignalgenerator und einen Empfänger aufweist, wobei das Verfahren die Schritte aufweist, daß die Vertikalestrahlablenkung des Generators moduliert wird, während ein Videosignal für jede Zeile eines Fernsehbildes erzeugt wird, wobei die Modulation eine Frequenz hat, die ausreichend ist, um zu bewirken, daß jede abgetastete Zeile wellenförmig um eine normale gerade Abtastlinie mit einer beträchtlichen Periodenzahl schwingt, und daß die vertikale Strahlablenkung des Empfängers mit derselben Phase und der relativen Amplitude wie die Modulation des Videosignals zur Anzeige jeder Zeile eines Fernsehbildes in demselben Muster wie durch den Generator abgetastet, moduliert wird, dadurch gekennzeichnet, daß der Generator die auf einer durch einen Frequenzkonstanten Oszillator (20) generierten Farbträger modulierte Farbinformation überträgt, daß der Empfänger einen frequenzkonstanten Oszillator (26) hat, der mit dem Generatoroszillator synchronisiert ist, und daß die Modulation der Vertikalstrahlablenkung beim Generator und Empfänger mit den zugeordneten Oszillatoren synchronisiert ist, und daß die Amplitude der Vertikalstrahlablenkungsmodulation für jede Schwingungsperiode so ausreichend ist, daß der Abtastbereich der benachbarten Zeilen in einem Fernsehbild ausgeschaltet wird.

2. Verfahren nach Anspruch 1, bei dem die Information zur Synchronisierung der Modulation des Empfängers Periodenburste von dem frequenzkonstanten Oszillator (20) am Generator, der torgesteuert mit dem Empfänger verbunden ist, während den Zeilenaustastperioden des Videosignals aufweist, und daß der Empfänger diese Burste zur Synchronisierung der Phase des frequenzkonstanten Oszillators am Empfänger annimmt.

3. Verfahren nach Anspruch 2, bei dem jedes Fernsehbild eine vorbestimmte Anzahl von Zeilen umfaßt, die in zwei Felder aus verschachtelten Zeilen unterteilt sind, bei dem der Schritt vorgesehen ist, gemäß dem die Phase des Farbträgers bei aufeinanderfolgenden Zeilen jedes Farbbildes verschoben wird, um die Modulationsphase jeder Zeile sowohl am Generator als auch am Empfänger konstant zu halten.

4. Verfahren nach Anspruch 2, das den Schritt enthält, gemäß dem die Frequenz des Trägers mit einem vorbestimmten Vielfachen zur Modulation jeder Zeile mit einer gesamten Periodenzahl sowohl am Generator als auch am Empfänger multipliziert wird.

5. Verfahren nach Anspruch 4, bei dem das vorbestimmte Vielfache ein ganzzahliges Vielfaches ist.

6. Fernsehanlage, die eine Kamera zur Erzeugung eines Videosignals und einen Empfänger zur Darstellung des Videosignals aufweist, wobei die Kamera ein Joch (13) zur vertikalen und horizontalen Ablenkung eines Elektronenstrahls hat, die zur Abtastung einer vorbestimmten Anzahl von horizontalen Zeilen für jedes Fernsehbild betreibbar ist, wobei der Empfänger ein Joch (22) zur vertikalen und horizontalen Ablenkung eines synchronisierten Elektronenstrahls zur Darstellung des Fernsehbildes hat, und wobei die Anlage ferner Einrichtungen (30, 31, 32) zur Modulation der Vertikalstrahlablenkung der Kamera mit einer rate hat, um eine beträchtliche Periodenzahl der Schwingungswelle um die normale gerade Abtastlinie zu erzeugen und bei der eine Einrichtung (33, 34, 35) zur Modulation der Vertikalstrahlablenkung des Empfängers mit derselben Phase und der relativen Amplitude wie die Modulation der Kamera-Vertikalstrahlablenkung zur Darstellung jeder Zeile des Fernsehbildes in dem gleichen Muster wie das durch die Kamera abgetastete aufweist, dadurch gekennzeichnet, daß die Kamera auf einem durch einen frequenzkonstanten Oszillator (20) generierten Farbträger modulierte Farbinformation überträgt, daß der Empfänger einen frequenzkonstanten Oszillator (26) hat, der mit dem Kameraoszillator synchronisiert ist, und daß die Modulation der Vertikalstrahlablenkung an der Kamera und am Empfänger mit den zugeordneten Oszillatoren synchronisiert ist, und daß die Amplitude der Vertikalstrahlablenkungsmodulation für jede Schwingungswellenperiode derart ausreichend ist, daß die benachbarten Zeilen eines Fernsehbildes mitaufgeschaltet werden.

7. Anlage nach Anspruch 6, bei der die Ablenkeinrichtung für die Kamera einen frequenzkonstanten Kameraoszillator (20) aufweist, der vertikale Ablenkspulen (31) treibt, die dem Joch (13) der Kamera zugeordnet sind, und daß die Ablenkeinrichtung für den Empfänger einen frequenzkonstanten Empfängeroszillator (26) aufweist, der vertikale Ablenkspulen (35) treibt, die dem Joch (22) des Empfängers zugeordnet sind.

8. Anlage nach Anspruch 7, bei der die durch die Kamera mit dem Videosignal übertragene Synchronisationsinformation Periodenburste des torgeschalteten Kameraoszillators während den Zeilenaustastperioden jedes Fernsehbildes aufweist.

9. Anlage nach Anspruch 8, bei der die Ablenkeinrichtung für die Kamera einen Frequenzmultiplizierer (32) zum Multiplizieren der Oszillatorfrequenz für die Kamera mit einem vorbestimmten Vielfachen Aufweist, und bei der die Ablenkeinrichtung für den Empfänger einen Frequenzmultiplizierer (33) mit demselben Vielfachen enthält, wobei jede Abtastzeile sowohl in der Kamera als auch im Empfänger eine ganze Zahl von Modulationsperioden enthält.

## Revendications

1. Procédé d'augmentation de la résolution verticale d'une image vidéo produite image par image dans un système d'affichage à balayage par trame, comprenant un générateur et un récepteur de signaux vidéo, le procédé comprenant les étapes de modulation de la déviation verticale du faisceau du générateur avec formation d'un signal vidéo pour chaque ligne d'une image, la modulation ayant une fréquence suffisante pour que chaque ligne balayée ondule autour du balayage rectiligne normal pendant un nombre important de cycles, et de modulation de la déviation verticale du faisceau du récepteur avec la même phase et la même amplitude relative que la modulation du signal vidéo afin que chaque ligne d'une image soit affichée avec le même dessin que celui qui est utilisé pour le balayage par la générateur, caractérisé en ce que le générateur transmet une information de couleur modulée sur une porteuse de couleur créée par un oscillateur stable (20), le récepteur comporte un oscillateur stable (26) synchronisé sur l'oscillateur du générateur, et la modulation de la déviation verticale du faisceau au niveau du générateur et du récepteur est synchronisée sur les oscillateurs respectifs, et en ce que l'amplitude de la -

modulation de la déviation verticale du faisceau suffit pour que chaque cycle d'ondulation provoque la pénetration dans la zone de balayage de lignes adjacentes dans une image.

2. Procédé selon la revendication 1, caractérisé en ce que l'information de synchronisation de la modulation du récepteur est constituée de salves de cycles provenant de l'oscillateur stable (20) au niveau du générateur, transmises au récepteur pendant les périodes de suppression de ligne du signal vidéo, et le récepteur accepte ces salves afin qu'il synchronise la phase de l'oscillateur stable du récepteur.

3. Procédé selon la revendication 2, dans lequel chaque image comporte un nombre prédéterminé de lignes réparties en deux trames de lignes entrelacées, comprenant l'étape de déphasage de la porteuse de couleur lors des lignes successives de chaque trame afin que la phase de modulation de chaque ligne reste constante à la fois au niveau du générateur et au niveau du récepteur.

4. Procédé selon la revendication 2, comprenant l'étape de multiplication de la fréquence de la porteuse par un multiple prédéterminé afin que chaque ligne soit modulée par un nombre entier de cycles à la fois au niveau du générateur et du récepteur.

5. Procédé selon la revendication 4, dans lequel le multiple prédéterminé est un multiple entier.

6. Système de télévision comprenant une caméra destinée à former un signal vidéo et un récepteur destiné à afficher le signal vidéo, la caméra ayant un circuit (13) de déviation verticale et horizontale d'un faisceau d'électrons piloté afin qu'il balaye un nombre prédéterminé de lignes horizontales pour chaque image vidéo, et le récepteur ayant un circuit (21) de déviation verticale et horizontale d'un faisceau d'électrons synchronisé de manière qu'il affiche l'image, et comprenant en outre un dispositif (30, 31, 32) de modulation de la déviation verticale du faisceau de la caméra à une fréquence donnant un nombre important de cycles d'ondulation autour du balayage rectiligne normal et un dispositif (33, 34, 35) de modulation de la déviation verticale du faisceau du récepteur avec la même phase et la même amplitude relative que la modulation de la déviation verticale du faisceau de la caméra afin que chaque ligne de l'image soit affichée avec le même dessin que celui qui est utilisé pour le balayage par la caméra, caractérisé en ce que la caméra émet une information de couleur modulée sur une porteuse de couleur créée par un oscillateur stable (20), le récepteur a un oscillateur stable (26) synchronisé sur l'oscillateur de la caméra, et la modulation de la déviation vertical du faisceau au niveau de la caméra et au niveau du récepteur est synchronisée sur les oscillateurs respectifs, et en ce que l'amplitude de la modulation de la déviation verticale du faisceau suffit pour que chaque cycle d'ondulation provoque le pénétration dans la zone de balayage de lignes adjacentes dans une image.

7. Appareil selon la revendication 6, dans lequel le dispositif de déviation de la caméra comporte l'oscillateur stable (20) de la caméra qui pilote des bobines (31) de déviation verticale associées au circuit de déviation (13) de la caméra, et le dispositif de déviation du récepteur comporte l'oscillateur stable (26) du récepteur qui pilote des bobines (35) de déviation verticale associées au circuit de déviation (22) du récepteur.

8. Appareil selon la revendication 7, dans lequel l'information de synchronisation transmise par la caméra avec le signal vidéo est sous forme de salves de cycles de l'oscillateur de la caméra, déclenchées pendant les périodes de suppression de ligne de chaque image.

9. Appareil selon la revendication 8, dans lequel le dispositif de déviation de la caméra comporte un circuit multiplicateur de fréquence (32) destiné à multiplier la fréquence de l'oscillateur de la caméra par un multiple prédéterminé, et dans lequel le dispositif de déviation du récepteur comporte un circuit multiplicateur de fréquence (33) mettant en oeuvre le même multiple, sibien que chaque ligne de balayage, à la fois dans la caméra et dans le récepteur, contient un nombre entier de cycles de modulation.

FIG. 1

FIG. 2

FIG. 3

FIG. 4